# EUROPEAN PATENT APPLICATION

(11) **EP 4 734 186 A1**
(43) Date of publication of application: **29.04.2026**
(21) Application number: 25206496.9
(22) Date of filing: 02.10.2025
(51) Int. Cl.: H01M 4/58

(54) **ELECTRODE STRUCTURE, METHOD OF MANUFACTURING THE ELECTRODE STRUCTURE, AND SECONDARY BATTERY INCLUDING THE ELECTRODE STRUCTURE**

(30) Priority: 16.10.2024 KR 20240141368
(71) Applicant: SAMSUNG SDI CO., LTD., Yongin-si, Gyeonggi-do 17084 (KR)
(72) Inventor: LEE, Donggeun, 17084 Yongin-Si (KR); KIM, Min-Sic, 17084 Yongin-Si (KR); MOON, Jeunggi, 17084 Yongin-si (KR); JO, Jaeho, 17084 Yongin-Si (KR)
(74) Representative: Marks & Clerk LLP

(57) **Abstract**

An electrode structure includes a positive electrode substrate. A composite layer is disposed on a surface of the positive electrode substrate, with the composite layer including a conductive adhesive layer mixed with an active material. An insulating layer is disposed on opposite side surfaces of the composite layer. Also disclosed are a method of manufacturing an electrode structure, and a secondary battery including an electrode structure.

## Description

### BACKGROUND

### Field

The present invention relates to an electrode structure, a method for manufacturing the electrode structure, and a secondary battery including the electrode structure.

### Description of Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A typical dry electrode is manufactured by bonding an electrode film formed by pressing an electrode substrate, an active material, a binder, and a conductive material through a lamination process.

A conductive adhesive layer (e.g., a primer coating layer) is placed on an electrode film or an electrode substrate to strengthen the adhesion between the electrode film and the electrode substrate. A smaller thickness for the conductive adhesive layer is advantageous with respect to energy density because the conductive adhesive layer does not to contribute to the battery capacity. However, as the thickness of the conductive adhesive layer thinner, the thickness of the insulating layer formed on the side of the conductive adhesive layer also becomes thinner, which reduces an insulating effect.

The above information disclosed in this Background section is for enhancement of understanding of the background of the present disclosure, and therefore, it may contain information that does not constitute related (or prior) art.

### SUMMARY

The present invention aims to provide an electrode structure, a method for manufacturing the electrode structure, and a secondary battery including the electrode structure to solve the above-described problems. However, the present invention is not limited to solving such problems.

These and other aspects and features of the present disclosure will be described in or will be apparent from the following description of embodiments of the present invention.

According to a first aspect of the present invention, there is provided an electrode structure including a positive electrode substrate, a composite layer (e.g. a first composite unit) disposed on a surface (e.g. one surface) of the positive electrode substrate, with the composite layer including a conductive adhesive layer (or material) mixed with an active material, and an insulating layer (e.g. a first insulating layer) disposed on opposite side surfaces (e.g. both side surfaces) of the composite layer (e.g. the first composite unit).

The electrode structure may further include a dry electrode film provided as a coating on upper surfaces of the composite layer and the insulting layer.

The insulating layer may cover both side surfaces of the composite layer such that the side surfaces of the composite layer are not exposed.

An upper surface of the composite layer and an upper surface of the insulating layer may be disposed in a plane (e.g. the same plane or adjacent planes), wherein the insulating layer may contact the side surfaces of the first composite layer.

The first composite layer and the insulating layer may be formed at a height from 10 µm to 20 µm from a surface of the positive electrode substrate.

The conductive adhesive material may include the active material, an adhesive polymer, and a conductive material.

The active material may include lithium cobalt oxide (LCO) or lithium iron phosphate (LFP).

The adhesive polymer may be a polymer including any one of acrylic, silicone, urethane, and rubber, wherein the conductive material includes at least one of carbon black, carbon nanotubes (CNTs), multi-walled carbon nanotubes (MWCNTs), and thin-walled carbon nanotubes (TWCNTs).

The electrode structure may further include a second composite layer (e.g. second composite unit) disposed on a second surface (e.g. the other surface that is opposite to the aforementioned one surface) of the positive electrode substrate, with the second composite layer including a conductive adhesive material mixed with an active material, and a second insulating layer provided on opposite side surfaces of the second composite layer.

An upper surface of the second composite layer and an upper surface of the second insulating layer may be disposed in a plane (e.g. the same plane or adjacent planes), and the second insulating layer may contact the side surfaces of the second composite layer.

The second composite layer and the second insulating layer may be formed at a height from 10 µm to 20 µm from the second surface of the positive electrode substrate.

According to a second aspect of the present invention, there is provided a method of manufacturing an electrode structure, the method including the steps of: (a) preparing a positive electrode substrate, (b) providing a composite layer (e.g. a first composite unit) including a conductive adhesive material (e.g. conductive adhesive layer) mixed with an active material on a surface (e.g. one surface) of the positive electrode substrate, and providing an insulating layer (e.g. a first insulating layer) on side surfaces (e.g. both side surfaces) of the composite layer, the insulating layer being disposed on the surface of the positive electrode substrate on which the first composite layer is formed.

The method may include providing a dry electrode film as a coating on upper surfaces of the composite layer and the insulating layer.

The composite layer and the insulating layer may be simultaneously coated and dried on the surface of the positive electrode substrate.

Alternatively, the composite layer and the insulating layer may be sequentially coated and simultaneously dried on the surface of the positive electrode substrate.

Further alternatively, the composite layer and the insulating layer may be sequentially coated and dried on the surface of the positive electrode substrate.

The insulating layer may cover side surfaces of the composite layer in such a manner so as not to expose one or both, preferably both, side surfaces of the composite layer.

The step of providing of the dry electrode film on the upper surfaces of the composite layer and the insulating layer may include laminating the dry electrode film on the composite layer and the insulating layer by using a laminating roller.

The method may further include providing a second composite layer (e.g. second composite unit) including a conductive adhesive material (e.g. conductive adhesive layer) mixed with an active material on a second surface (e.g. the other surface that is opposite to the aforementioned one surface) of a positive electrode substrate, and providing a second insulating layer on side surfaces (e.g. both side surfaces) of the second composite layer, with the second insulating layer disposed on the second surface of the positive electrode substrate on which the second composite layer is provided.

According to a third aspect of the present invention, there is provided a secondary battery including an electrode structure, wherein the electrode structure is a positive electrode, preferably in accordance with the aforementioned electrode structure of the first aspect of the invention, and an electrode assembly including the positive electrode, a negative electrode, and a separation film is provided in a case with an electrolyte.

Without being bound by any particular theory, it is believed that a conductive adhesive layer contributes to the battery capacity by mixing a conductive adhesive material with an active material so that the conductive adhesive layer is formed with a greater thickness compared to the conventional conductive adhesive layer. In addition, an insulating layer disposed on both sides of the conductive adhesive layer is able to be formed with a thickness corresponding to that of the adhesive layer, thereby increasing an insulating effect.

However, aspects and features of the present invention are not limited to those described above, and other aspects and features not mentioned will be clearly understood by a person skilled in the art from the detailed description, described below.

At least some of the above and other features of the invention are set out in the claims.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view of an example of an electrode structure according to embodiments of the present disclosure;
FIG. 2 is a side view of a structure of an electrode structure according to embodiments of the present disclosure;
FIG. 3 is a side view of an electrode structure in which a dry electrode film is arranged according to embodiments of the present disclosure;
FIG. 4 is a side view of an electrode structure according to embodiments of the present disclosure;
FIG. 5 is a side view of an electrode structure in which a dry electrode film is arranged on both sides according to embodiments of the present disclosure;
FIG. 6 is a view of a lamination step according to embodiments of the present disclosure;
FIG. 7 is a flowchart of a method of manufacturing an electrode structure according to embodiments of the present disclosure; and
FIG. 8 is an exploded view of a secondary battery according to embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor may be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that may replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

According to embodiments of the present disclosure, the sizes of layers and areas are illustrated in the drawings may be exaggerated for clarity of explanation. The sizes in the drawings are only for ease of explanation, but the present disclosure is not limited thereto. Like reference numerals in the drawings denote like elements throughout the specification.

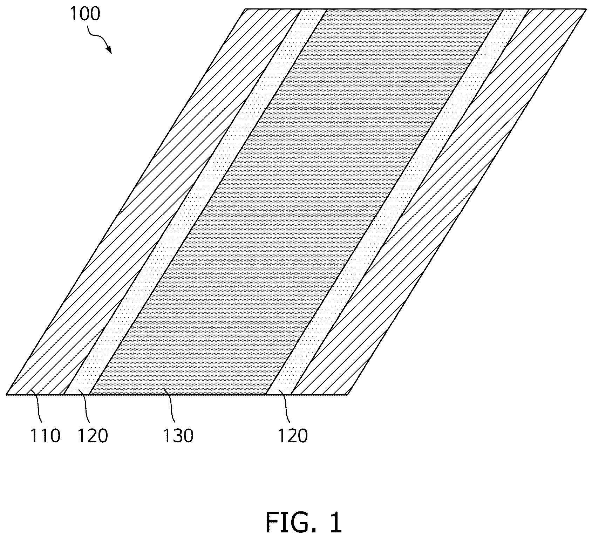

FIG. 1 is a perspective view from above of an electrode structure 100 according to embodiments of the present disclosure.

Referring to FIG. 1, an electrode structure 100 according to the present invention includes a positive electrode substrate 110, a first composite layer 130 disposed on a surface of the positive electrode substrate 110, and a first insulating layer 120 disposed on both side surfaces of the first composite layer 130.

The positive electrode substrate 110 may be formed from a material having a high conductivity such as stainless steel, aluminium, nickel, titanium, calcined carbon, copper, or aluminium or a surface-processed form of these materials. But the present disclosure is not limited to these examples. The positive electrode substrate 110 may be in various forms, for example, a film, a sheet, a foil, a net, a porous body, a foam body, a non-woven fabric, etc.

The first composite layer 130 includes a conductive adhesive material mixed with an active material. The adhesion of the conductive adhesive material may be controlled by mixing a conductive adhesive material with a positive electrode active material at different composition ratios. Accordingly, the conductive adhesive material provides adhesion and also increases the capacity of a secondary battery to thereby increase an energy density. Table 1 shows experimental results of measuring the adhesion of the first composite layer 130 according to different mixing ratios of the conductive adhesive material and the positive electrode active material.

**Table 1**

| | Conductive Adhesive Material (vol.%) | Positive Electrode Active Material (vol.%) | Adhesion (gf/mm) |
|---|---|---|---|
| Comparative 1 | 100 | 0 | 12 |
| Embodiment 1 | 90 | 10 | 10 |
| Embodiment 2 | 70 | 30 | 8 |
| Embodiment 3 | 50 | 50 | 6 |
| Embodiment 4 | 30 | 70 | 4 |
| Embodiment 5 | 10 | 90 | 3 |

The mixing ratios between the conductive adhesive material and the positive electrode active material may be set with consideration of the adhesion with a dry electrode film. According to Table 1, as the ratio of the conductive adhesive material increases, the adhesion may increase. However, when the ratio of the conductive adhesive material increases, the amount of the positive electrode active material may be reduced, which is disadvantageous because the result may be reduced energy density. The amount (vol %) of the conductive adhesive material may range from 1% to 99%, and the amount (vol %) of the positive electrode active material may range from 99% to 1%.

The conductive adhesive material may be formed by mixing an active material, an adhesive polymer, and a conductive material. The active material may include Lithium Cobalt Oxide (LCO) or Lithium Iron Phosphate (LFP). For example, Lithium Iron Phosphate (LFP) with particle sizes from 10 um to 20 um may be used to form a thin film layer. The active material may vary depending on the type of dry electrode to be manufactured. For example, when the dry electrode to be manufactured is a positive electrode, the active material may be a positive electrode active material.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, and combinations thereof.
As more specific examples, the following compounds represented by any one of the following Chemical Formulas may be used: LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}CO_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L1_{d}GeO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); and LiₐFePO₄ (0.90≤a≤1.8). In these formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal in the lithium transition metal composite oxide except for lithium. The high-nickel-based positive electrode active material may be capable of providing high capacity and may be used in a high-capacity, high-density rechargeable lithium battery.

According to embodiments, when the dry electrode to be manufactured is a negative electrode, the active material may be a negative electrode active material. The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, crystalline carbon, amorphous carbon, or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy, or a combination thereof. In the formula Si-Q, Q is selected from an alkali metal, an alkaline-earth metal, a Group 13 element, a Group 14 element (excluding Si), a Group 15 element, a Group 16 element, a transition metal, a rare earth element, and a combination thereof. The Sn-based negative electrode active material may include Sn, SnO2, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surfaces of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

It should be noted the above-descriptions of various materials are merely exemplary. Any positive electrode active material or the negative electrode active material typically used in the field may be used in conjunction with the present disclosure.

The adhesive polymer may include any one of an acrylic type, a silicone type, a urethane type, and a rubber type. For example, the adhesive polymer may include polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, etc. But the present disclosure is not limited to these examples.

The conductive material may include at least one of carbon black, carbon nanotubes (CNTs), multi-walled carbon nanotubes (MWCNTs), and thin-walled carbon nanotubes (TWCNTs).

The conductive material may be used to impart conductivity (e.g., electrical conductivity) to the electrode. Any material that does not cause chemical change (e.g., does not cause an undesirable chemical change in the rechargeable lithium battery) and conducts electrons may be used. Examples of the conductive material include a carbon-based material such as natural graphite, artificial graphite, carbon black, acetylene black, ketjen black, a carbon fiber, a carbon nanofiber, and carbon nanotube; a metal-based material containing copper, nickel, aluminium, silver, etc., in a form of a metal powder or a metal fiber; a conductive polymer such as a polyphenylene derivative; and mixtures thereof.

The first insulating layer 120 is disposed on opposite sides of the first composite layer 130. The first insulating layer 120 is formed on the same surface of the positive electrode substrate 110 on which the first composite layer 130 is provided. According to embodiments, the first insulating layer 120 may be dried after being coated on the surface of the positive electrode substrate 110. The first insulating layer 120 may be formed of an insulating material that does not cause a chemical change in the secondary battery.

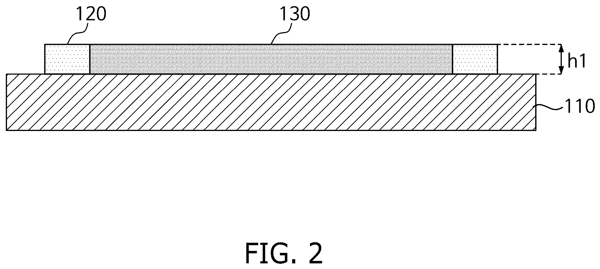

FIG. 2 is a side view of the structure of an electrode structure according to the first aspect of the present invention.

Referring to FIG. 2, the first composite layer 130 and the first insulating layer 120 are disposed on a surface (i.e. the same surface) of the positive electrode substrate 110. The first composite layer 130 may be disposed at the centre in a width direction of the positive electrode substrate 110 and spaced apart from edges of at the sides of the positive electrode substrate 110 by a first predetermined distance. The first insulating layer 120 is disposed on the (same) surface of the positive electrode substrate 110 and provided on opposite sides of the first composite layer 130. The first insulating layer 120 may be spaced apart from the edges of both sides of the positive electrode substrate 110 by a second predetermined distance.

The first insulating layer 120 may be provided such that both sides of the first composite layer 130 are covered by the first insulating layer 120 and therefore not exposed. For example, the top (e.g. top/upper surface) of the first composite layer 130 and the top (e.g. top/upper surface) of the first insulating layer 120 may be placed on (e.g. co-exist in) the same plane, and the first insulating layer 120 contacts opposite sides (e.g. side surfaces) of the first composite layer 130. When heights of the first composite layer 130 and the first insulating layer 120 (e.g. to each of their top/upper surfaces) from the surface of the positive electrode substrate 110 are defined as heights of the first composite layer 130 and the first insulating layer 120, the first composite layer 130 and the first insulating layer 120 may be formed at the same height (hl) from the surface of the positive electrode substrate 110. As an example, the first composite layer 130 and the first insulating layer 120 may be formed at a height ranging from 10 µm to 20 µm from the surface of the positive electrode substrate 110.

In another example, the height of the first insulating layer 120 from the surface of the positive electrode substrate 110 may be greater than the height of the first composite layer 130 from the surface of the positive electrode substrate 110.

Table 2 below illustrates insulation performance according to the heights of a conductive adhesive material and a positive electrode active material from a surface of the positive electrode substrate 110 and the current density of the electrode structure. In Table 2, in the 'Insulation Performance' column, 'O' indicates good insulation performance, 'Δ' signifies insufficient insulation performance, and 'X' denotes a non-insulated state.

**Table 2**

| | Composite Layer and Insulating Layer Thickness (µm) | Conductive Adhesive Material (vol.%) | Dry Electrode Film Thickness (µm) | Current Density (mAh/cm²) | Insulation Performance |
|---|---|---|---|---|---|
| Comparative 1 | 1 | 0 | 99 | 7.8 | X |
| Embodiment 1 | 5 | 0 | 95 | 7.5 | Δ |
| Embodiment 2 | 10 | 0 | 90 | 7.1 | O |
| Embodiment 3 | 10 | 50 | 90 | 7.5 | O |
| Embodiment 4 | 20 | 50 | 80 | 7.1 | O |

The heights of the first composite layer 130 and the first insulating layer 120 may be set in consideration of the thickness of a dry electrode film. According to Table 2, as the height of the first insulating layer 120 increases, the insulation performance may be ensured. As such, in examples, the first insulating layer 120 and the first composite layer 130 may be formed at the height ranging from 10 µm to 20 µm from the surface of the positive electrode substrate 110. The composition ratio between the positive electrode active material and the conductive adhesive material may be set by the adhesion with the dry electrode film described in Table 1. For example, when the composite layer is composed of the conductive adhesive material and the active material in a 1:1 ratio, both insulation performance and adhesion can be ensured.

Conventional conductive adhesive layers may not contribute to the capacity of batteries; although a smaller thickness may be advantageous to the energy density, the insulating affect may be reduced because the thickness of the insulating layer formed on the side surface of the conductive adhesive layer becomes smaller as the thickness of the conductive adhesive layer becomes smaller. According to embodiments of the present invention, a first composite layer formed by mixing a conductive adhesive material with an active material is provided on a positive electrode substrate such that the first composite layer may be thicker than the conventional adhesive material. In addition, the insulating layer provided on opposite sides of the first composite layer may have a thickness corresponding to that of the first composite layer, thereby increasing an insulting effect.

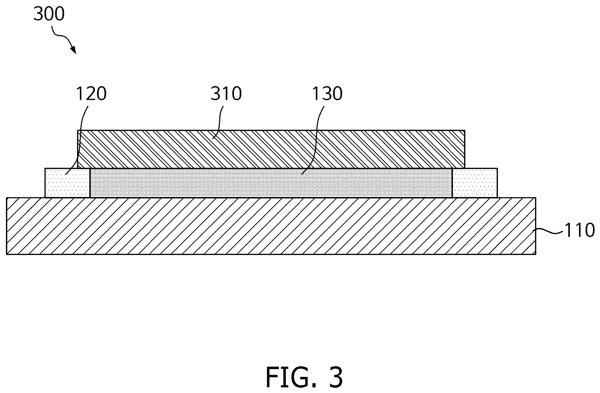

FIG. 3 is a side view of an electrode structure 300 in which a dry electrode film 310 is arranged according to embodiments.

Referring to FIG. 3, an electrode structure 300 may further include a dry electrode film 310 disposed on top of both the first insulating layer 120 and the first composite layer 130. The dry electrode film 310 may coat only a portion of one or both of the first composite layer 130 and the first insulating layer 120. The bottom of the dry electrode film 310 (e.g. the bottom/lower surface of the dry electrode film 310) may contact the top (e.g. the top/upper surface) of the first composite layer 130 and the top (e.g. the top/upper surface) of the first insulating layer 120 without gaps therebetween. The electrode structure 300 may be formed by pressing the dry electrode film to the top (e.g. the uppermost surface) of the electrode structure 300 by a lamination process.

Herein, a dry process or dry electrode may indicate a process or an electrode that does include a solvent or does not intentionally include the use of a solvent during an electrode manufacturing process. The solvent may include process solvents, process solvent residues, process solvent impurities, etc. As an example, the composite layer may be in the form of a dry film that includes a dry active material and a dry binder. The dry binder may be, for example, a binder that is not impregnated, dissolved, or dispersed in a solvent. In other examples, the dry binder may be a binder that includes a solvent or a binder that avoids contact with a solvent.

The dry binder may include, for example, a fibrillated binder. The fibrillated binder may function as a matrix that supports and binds the dry active material and/or other components included in the dry electrode film 310. The fibrillated binder may have a fibrous form as seen in a scanning electron microscope (SEM) image of the dry electrode film 310. The fibrillated binder may have an aspect ratio of 10 or more, 20 or more, 50 or more, or 100 or more. Herein, the aspect ratio is defined as the ratio of the length (L) of the fiber to its diameter (D) (L/D). The dry binder may include, for example, polytetrafluoroethylene (PTFE), polyvinylidene fluoride-hexapropylene (PVDF-HFP) copolymers, polyvinylidene fluoride (PVDF), polyvinyl alcohol, polyacrylonitrile, carboxymethyl cellulose (CMC), starch, hydroxypropyl cellulose, cellulose, polyvinylpyrrolidone, polyethylene, polypropylene, ethylene-propylene-diene polymer (EPDM), sulfonated-EPDM, styrene butadiene rubber (SBR), fluoro- rubber, or copolymers thereof, but the present disclosure is not limited to these examples. Any binder that is used in the manufacturing of the dry film may be used. The dry binder may include, in particular, a fluorinated binder. The fluorinated binder may be, for example, polytetrafluoroethylene (PTFE), polyvinylidene fluoride-hexapropylene (PVDF-HFP) copolymer, or polyvinylidene fluoride (PVDF). The amount of the dry binder included in the dry electrode film 310 may be, for example, 0.5 wt% to 10 wt%, or 1 wt% to 5 wt%, with respect to the total weight of the dry electrode film 310. The adhesion between the dry electrode film 310 and the substrate layer may be increased because the dry electrode film 310 includes the dry binder in the above-described ranges, and the dry electrode including the dry electrode film 310 may have a high energy density.

The dry electrode film 310 may further include a dry conductive material. The dry conductive material may be, for example, a conductive material that is not impregnated, dissolved, or dispersed in a solvent. In other examples, the dry conductive material may be a conductive material that includes a solvent or avoids contact with a solvent.

The dry conductive material may be, for example, a carbon-based conductive material, a metal-based conductive material, or a combination thereof. The dry conductive material may include, for example, a carbon-based conductive material. The carbon-based conductive material may be carbon black, graphite particles, natural graphite, artificial graphite, acetylene black, Ketjen black, carbon fibers, carbon nanotubes, etc.. But the present disclosure is not limited to these materials. Any material used as a carbon-based conductive material in the technical field could be used. The amount of the dry conductive material included in the dry electrode film 310 may be, for example, 0.5 wt% to 10 wt%, or 1 wt% to 5 wt%, with respect to the total weight of the dry electrode film 310. The conductivity of the dry electrode film 310 may be improved because the dry electrode film 310 includes a dry conductive material within the above-described ranges, thereby maintaining the high energy density of the dry electrode film 310. The dry conductive material may be, for example, a porous conductive material. When the dry conductive material is porous, an electrolyte may be easily impregnated into the inside of the dry electrode film 310 including the porous dry conductive material. Accordingly, the internal resistance of the lithium battery including the dry electrode film 310 may be reduced.

The dry electrode film 310 may be made in a dry process without a process solvent being added. The dry electrode film 310 may not include a residual processing solvent. A small amount (e.g. a *de minimis* amount) of solvents may unintentionally remain in the dry electrode film 310, but such solvents do not constitute a processing solvent that is intentionally added. The dry electrode film 310 may be different from a humid electrode film manufactured by making an electrode slurry by mixing an electrode component with a process solvent, drying the electrode slurry, and removing a part or all of the process solvent.

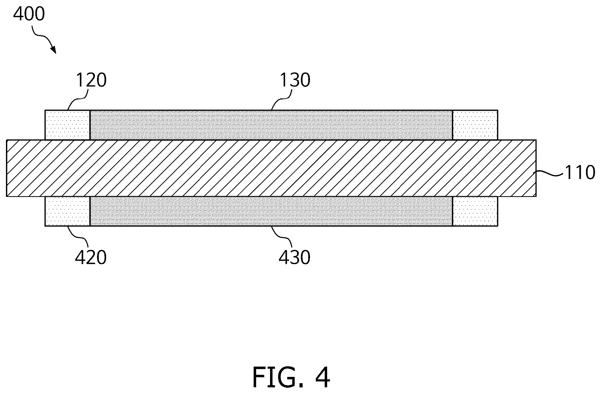

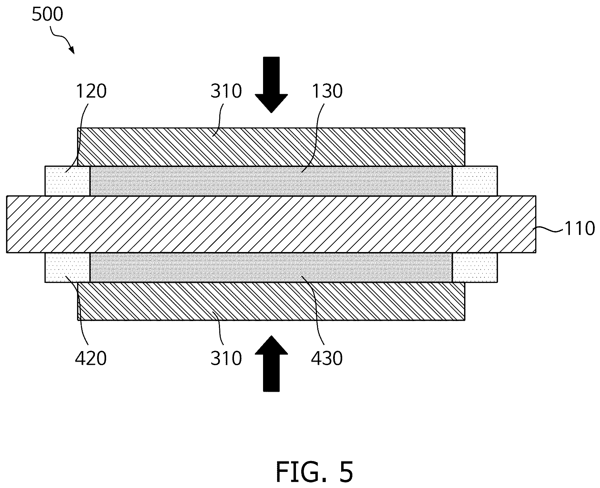

FIG. 4 is a side view of an electrode structure 400 according to embodiments of the present disclosure. FIG. 5 is a side view of an electrode structure 500 in which a dry electrode film is arranged on both sides of the electrode structure 500 according to embodiments of the present disclosure.

Referring to FIG. 4, an electrode structure 400 may be formed on opposite surfaces of the positive electrode substrate 110. Such an arrangement includes a second composite layer 430 including a conductive adhesive material mixed with an active material and a second insulating layer 420 placed on both sides of the second composite layer 430.

The second composite layer 430 may include a conductive adhesive material mixed with an active material. The adhesion of the conductive adhesive material, i.e., the second adhesive layer 430 may be controlled by varying a composition ratio of a conductive adhesive material with a positive electrode active material. Accordingly, the second composite layer 430 may provide adhesion and also increase the capacity of secondary battery, which thereby increases the energy density. The same materials described above may be used as the conductive adhesive material and the active material of the second composite layer 430, and, thus, the descriptions will not be repeated.

The second insulating layer 420 may be disposed to cover sides (e.g. side surfaces) of the second composite layer 430. The top (e.g. top/upper surfaces) of the second composite layer 430 and the top (e.g. top/upper surfaces) of the first insulating layer 120 may be disposed (e.g. may co-exist) in the same plane, and the second insulating layer 420 may contact opposite sides (e.g. side surfaces) of the second composite layer 430. As a result, the second composite layer 430 and the second insulating layer 420 may be formed to the same height from a surface of the positive electrode substrate 110. For example, the second composite layer 430 and the second insulating layer 420 may be formed at the height of 10 µm to 20 µm from the surface of the positive electrode substrate 110. In another example, the height of the second insulating layer 420 from the surface of the positive electrode substrate 110 may be greater than the height of the second composite layer 430 from the surface of the positive electrode substrate 110.

Referring to FIG. 5, an electrode structure 500 may further include a dry electrode film 310 provided on both the second insulating layer 420 and the second composite layer 430. The dry electrode film 310 may coat only a portion of one or both of the second composite layer 430 and the second insulating layer 420. As viewed in FIG. 5, the bottom of the dry electrode film 310 (e.g. the bottom/lower surface of the dry electrode film 310) identified by the black arrow may contact the top (e.g. the top/upper surface) of the second composite layer 430 and the top (e.g. the top/upper surface) of the second insulating layer 420 without gaps therebetween. The dry electrode film may be pressed to the top and bottom (e.g. the uppermost and lowermost surfaces) of the electrode structure 500 in a lamination process.

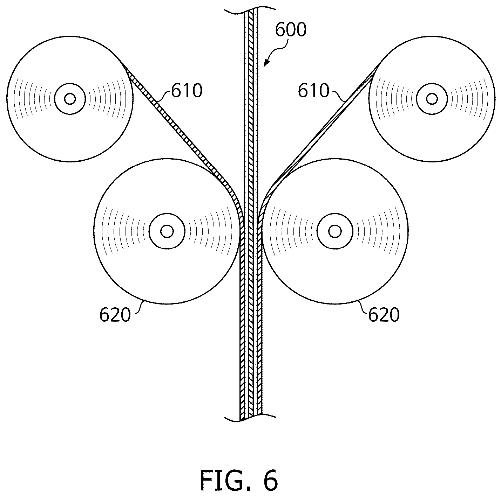

FIG. 6 is a view of a step of lamination according to embodiments of the present disclosure.

An electrode structure 600 of FIG. 6 may be any one of the electrode structures 100, 300, 400, and 500 described above and depicted in FIGS. 1 to 5.

The method of manufacturing the electrode structure 600 may include a step of laminating a dry electrode film 610 on a first composite layer and a first insulating layer by using a laminating roller 620. The laminating process may include a pair of laminating rollers 620, a first supply end, and a second supply end.

According to embodiments, the laminating process may be performed by passing and pressing the electrode structure 600 including a composite layer and an insulating layer and the dry electrode film 610 between the pair of laminating rollers 620. According to another example, the electrode structure 600 and the electrode film 610 may be pressed between a pair of jigs that face each other.

When the electrode structure 600 and the dry electrode film 610 are pressed, the laminating roller 620 may be heated to thereby heat the electrode structure 600 and the dry electrode film 610. Thus, the electrode substrate 100 and the electrode layer 300 may be bonded through thermal compression.

The electrode structure 600 may be supplied from the first supply end to be provided between the laminating rollers 620. The first composite layer and the first insulating layer may be disposed on a first surface of the positive electrode substrate in the electrode structure 600 supplied from the first supply layer. A second composite layer and a second insulating layer may be further disposed on a second surface of the positive electrode substrate that is opposite to the first surface.

The dry electrode film 610 may be supplied from a pair of second supply ends and pressed at each of the top and/or the bottom of the electrode structure 600. Accordingly, the electrode structure 600 including the dry electrode film 610, a positive electrode substrate, a composite layer and an insulting layer may be formed.

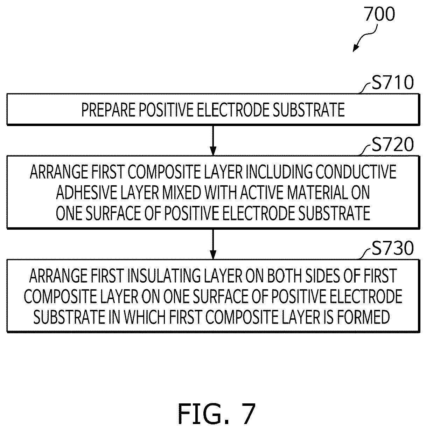

FIG. 7 is a flowchart of an electrode structure manufacturing method 700 according to embodiments of the present disclosure.

The electrode structure manufacturing method 700 begins by preparing a positive electrode substrate in step S710.

A first composite layer including a conductive adhesive material mixed with an active material is disposed on a surface of the positive electrode substrate in step S720.

The first insulating layer is disposed on opposite sides (e.g. side surfaces) of the first composite layer with respect to one surface of the positive electrode substrate in which the first composite layer is formed in step S730. The first insulating layer may be placed not to expose both sides of the first composite layer. Additionally, a second compositive layer including a conductive adhesive material mixed with an active material may be disposed on the other side (e.g. the other surface that is opposite to the aforementioned one surface) of the positive electrode substrate. In some embodiments, the second insulating layer may be placed on both sides (e.g. side surfaces) of the second composite layer with respect to the other side of the positive electrode substrate in which the second composite layer is formed.

According to embodiments, a first composite layer and a first insulating layer may be simultaneously coated and dried on one surface of the positive electrode substrate. Alternatively, the first composite layer and the first insulating layer may be sequentially coated and simultaneously dried on one surface of the positive electrode substrate. Further alternatively, the first composite layer and the first insulating layer may be simultaneously coated and sequentially dried on one surface of the positive electrode substrate. Examples of the coating method of the first composite layer and the first insulating layer may include a slot die coating, a gravure coating and an inkjet coating.

The dry electrode film may be placed to coat the top (e.g. the top/upper surface) of the first composite layer and the first insulating layer. Specifically, a dry electrode film may be laminated on the first composite layer and the first insulating layer by using a laminating roller.

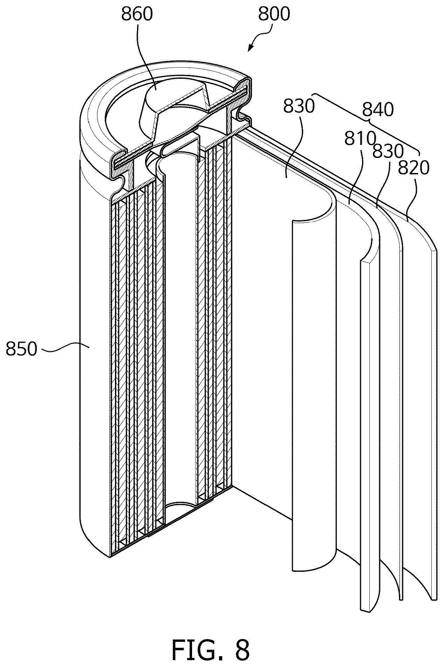

FIG. 8 is an exploded view illustrated to explain an example of a secondary battery 800 according to embodiments.

Referring to FIG. 8, a secondary battery 800 includes the electrode structure described in FIG. 1 to FIG. 7 as a positive electrode, an electrode assembly 840 including a positive electrode 810, a negative electrode 820, and a separator 830 may be embedded in a case 850 with an electrolyte.

The secondary battery may have a cylindrical, square, pouch, or coin shape. FIG. 8 is a schematic view illustrating a secondary battery 800 in a cylindrical shape. However, the present disclosure is not limited thereto, but embodiments of the present disclosure may be applied to a cylindrical, square, pouch, or coin shaped secondary battery.

Although not shown, the positive electrode 810, the negative 820, and the separator 803 may be impregnated with electrolyte. The secondary battery 800 may include a sealing member 860 for sealing the case 850. The secondary battery 800 may include a positive electrode lead tap, a positive electrode terminal, and a negative electrode lead tab, and a negative electrode terminal. The secondary battery 800 may include an electrode tab, i.e. a positive electrode tab, and a negative electrode tab that function as an electrical path for inducing a current formed in the electrode assembly 840 to the outside.

Although the present disclosure has been described above with respect to embodiments thereof, the present disclosure is not limited thereto. Various modifications and variations may be made thereto by those skilled in the art within the scope of the present invention as defined by the appended claims.

Embodiments are set out in the following clauses:
Clause 1. An electrode structure (100) comprising: a positive electrode substrate (110); a composite layer (130) disposed on a surface of the positive electrode substrate (110), with the composite layer (130) including a conductive adhesive material mixed with an active material; and an insulating layer (120) disposed on opposite side surfaces of the composite layer (130).
Clause 2. The electrode structure (100) of Clause 1, further comprising a dry electrode film (310) provided as a coating on upper surfaces of the composite layer (130) and the insulating layer (120).
Clause 3. The electrode structure (100) of Clause 1 or Clause 2, wherein the insulating layer (120) covers side surfaces of the composite layer (130) such that the side surfaces of the composite layer (130) are not exposed.
Clause 4. The electrode structure (100) of any preceding Clause, wherein an upper surface of the composite layer (130) and an upper surface of the insulating layer (120) are disposed in plane, and wherein the insulating layer (120) contacts the side surfaces of the composite layer (130).
Clause 5. The electrode structure (100) of Clause 4, wherein the composite layer (130) and the insulating layer (120) are formed to a height of 10 µm to 20 µm from a surface of the positive electrode substrate (110).
Clause 6. The electrode structure (100) of any preceding Clause, wherein the conductive adhesive material includes the active material, an adhesive polymer, and a conductive material.
Clause 7. The electrode structure (100) of any preceding Clause, wherein the active material includes lithium cobalt oxide or lithium iron phosphate.
Clause 8. The electrode structure (100) of Clause 6, wherein the adhesive polymer is a polymer including one of acrylic, silicone, urethane, and rubber, and wherein the conductive material includes at least one of carbon black, carbon nanotubes, multi-walled carbon nanotubes, and thin-walled carbon nanotubes.
Clause 9. The electrode structure (100) of any preceding Clause, wherein the composite layer is a first composite layer (130), the insulating layer is a first insulating layer (120), and the first composite layer (130) and the first insulating layer (120) are provided on a first surface of the positive electrode structure (100), and wherein the electrode structure (100) further comprises: a second composite layer (430) disposed on a second surface of the positive electrode substrate (110) that is opposite to the first surface, with the second composite layer (430) including a conductive adhesive material mixed with an active material; and a second insulating layer (420) provided on opposite side surfaces of the second composite layer (430).
Clause 10. The electrode structure (100) of Clause 9, wherein an upper surface of the second composite layer (430) and an upper surface of the second insulating layer (420) are disposed in a plane, and the second insulating layer (420) contacts the side surfaces of the second composite layer (430).
Clause 11. The electrode structure (100) of Clause 9 or Clause 10, wherein the second composite layer (430) and the second insulating layer (420) are formed at a height of 10 µm to 20 µm from the second surface of the positive electrode substrate (110).
Clause 12. A method of manufacturing an electrode structure (700), the method comprising: (a) preparing a positive electrode substrate (110); (b) providing a composite layer (130) comprising a conductive adhesive material mixed with an active material on a surface of the positive electrode substrate (110); and (c) providing an insulating layer (120) on side surfaces of the composite layer (130), the insulating layer (120) being disposed on the surface of the positive electrode substrate (110) on which the first composite layer (130) is provided.
Clause 13. The method of Clause 12, further comprising providing a dry electrode film (310) as a coating on upper surfaces of the composite layer (130) and the insulating layer (120).
Clause 14. The method of Clause 12 or Clause 13, wherein the composite layer (130) and the insulating layer (120) are simultaneously coated and dried on the surface of the positive electrode substrate (110).
Clause 15. The method of Clause 12 or Clause 13, wherein the composite layer (130) and the insulating layer (120) are sequentially coated and simultaneously dried on the surface of the positive electrode substrate (110).
Clause 16. The method of Clause 12 or Clause 13, wherein the composite layer and the insulating layer are sequentially coated and dried on the one surface of the positive electrode substrate.
Clause 17. The method of any one of Clauses 12 to 16, wherein the insulating layer covers side surfaces of the composite layer.
Clause 18. The method of any one of Clauses 13 to 17, wherein providing the dry electrode film on the upper surfaces of the composite layer and the insulating layer comprises laminating the dry electrode film on the composite layer and the insulating layer by using a laminating roller
Clause 19. The method of any one of Clauses 12 to 18, wherein the composite layer is a first composite layer, the insulating layer is a first insulating layer, and the surface of the positive electrode substrate is a first surface, and wherein the method further comprises: (a) providing a second composite layer comprising a conductive adhesive material mixed with an active material on a second surface of a positive electrode substrate; and (b) providing a second insulating layer on side surfaces of the second composite layer, the second insulating layer disposed on the second surface of the positive electrode substrate on which the second composite layer is provided.
Clause 20. A secondary battery comprising an electrode structure according to any one of Clauses 1 to 11, wherein the electrode structure is a positive electrode, and wherein an electrode assembly comprising the positive electrode, a negative electrode, and a separation film is provided in a case with an electrolyte.

### [Description of Notations]

100: Electrode Structure
110: Positive Electrode Substrate
120: First Insulating Layer
130: First Composite Layer
310: Dry Electrode Film
420: Second Insulating Layer
430: Second Composite Layer
800: Secondary Battery
810: Positive Electrode
820: Negative Electrode
830: Separator
840: Electrode Assembly
850: Case
860: Sealing Member

## Claims

1. An electrode structure (100) comprising:
a positive electrode substrate (110);
a composite layer (130) disposed on a surface of the positive electrode substrate (110), with the composite layer (130) including a conductive adhesive material mixed with an active material; and
an insulating layer (120) disposed on opposite side surfaces of the composite layer (130).

2. The electrode structure (100) as claimed in claim 1, further comprising a dry electrode film (310) provided as a coating on upper surfaces of the composite layer (130) and the insulating layer (120).

3. The electrode structure (100) as claimed in claim 1 or claim 2, wherein the insulating layer (120) covers side surfaces of the composite layer (130) such that the side surfaces of the composite layer (130) are not exposed.

4. The electrode structure (100) as claimed in any preceding claim, wherein an upper surface of the composite layer (130) and an upper surface of the insulating layer (120) are disposed in plane, and
wherein the insulating layer (120) contacts the side surfaces of the composite layer (130),
optionally wherein the composite layer (130) and the insulating layer (120) are formed to a height of 10 µm to 20 µm from a surface of the positive electrode substrate (110).

5. The electrode structure (100) as claimed in any preceding claim, wherein the conductive adhesive material includes the active material, an adhesive polymer, and a conductive material,
optionally wherein the adhesive polymer is a polymer including one of acrylic, silicone, urethane, and rubber, and
wherein the conductive material includes at least one of carbon black, carbon nanotubes, multi-walled carbon nanotubes, and thin-walled carbon nanotubes.

6. The electrode structure (100) as claimed in any preceding claim, wherein the active material includes lithium cobalt oxide or lithium iron phosphate.

7. The electrode structure (100) as claimed in any preceding claim, wherein the composite layer is a first composite layer (130), the insulating layer is a first insulating layer (120), and the first composite layer (130) and the first insulating layer (120) are provided on a first surface of the positive electrode structure (100), and
wherein the electrode structure (100) further comprises:
a second composite layer (430) disposed on a second surface of the positive electrode substrate (110) that is opposite to the first surface, with the second composite layer (430) including a conductive adhesive material mixed with an active material; and
a second insulating layer (420) provided on opposite side surfaces of the second composite layer (430).

8. The electrode structure (100) as claimed in claim 7, wherein (a) an upper surface of the second composite layer (430) and an upper surface of the second insulating layer (420) are disposed in a plane, and the second insulating layer (420) contacts the side surfaces of the second composite layer (430), and/or (b) the second composite layer (430) and the second insulating layer (420) are formed at a height of 10 µm to 20 µm from the second surface of the positive electrode substrate (110).

9. A method of manufacturing an electrode structure (700), the method comprising:
preparing a positive electrode substrate (110);
providing a composite layer (130) comprising a conductive adhesive material mixed with an active material on a surface of the positive electrode substrate (110); and
providing an insulating layer (120) on side surfaces of the composite layer (130), the insulating layer (120) being disposed on the surface of the positive electrode substrate (110) on which the first composite layer (130) is provided.

10. The method as claimed in claim 9, further comprising providing a dry electrode film (310) as a coating on upper surfaces of the composite layer (130) and the insulating layer (120).

11. The method as claimed in claim 9 or claim 10, wherein (a) the composite layer (130) and the insulating layer (120) are simultaneously coated and dried on the surface of the positive electrode substrate (110), or (b) the composite layer (130) and the insulating layer (120) are sequentially coated and simultaneously dried on the surface of the positive electrode substrate (110), or (c) the composite layer (130) and the insulating layer (120) are sequentially coated and dried on the one surface of the positive electrode substrate (110).

12. The method as claimed in any one of claims 9 to 11, wherein the insulating layer (120) covers side surfaces of the composite layer (130).

13. The method as claimed in any one of claims 10 to 12, wherein providing the dry electrode film (310) on the upper surfaces of the composite layer (130) and the insulating layer (120) comprises laminating the dry electrode film (310) on the composite layer (130) and the insulating layer (120) by using a laminating roller.

14. The method as claimed in any one of claims 9 to 13, wherein the composite layer (130) is a first composite layer, the insulating layer (120) is a first insulating layer, and the surface of the positive electrode substrate (110) is a first surface, and
wherein the method further comprises:
providing a second composite layer (430) comprising a conductive adhesive material mixed with an active material on a second surface of a positive electrode substrate (110); and
providing a second insulating layer (420) on side surfaces of the second composite layer (430), the second insulating layer (420) disposed on the second surface of the positive electrode substrate (110) on which the second composite layer (430) is provided.

15. A secondary battery (800) comprising an electrode structure (100) according to any one of claims 1 to 8, wherein the electrode structure (100) is a positive electrode (810), and wherein an electrode assembly (840) comprising the positive electrode (810), a negative electrode (820), and a separation film (830) is provided in a case (850) with an electrolyte.
